# EUROPEAN PATENT APPLICATION

(11) **EP 3 670 834 A1**
(43) Date of publication of application: **24.06.2020**
(21) Application number: 19210229.1
(22) Date of filing: 20.11.2019
(51) Int. Cl.: F01D 5/08, B01D 45/12, B04C 3/00, F01D 5/18

(54) **TURBINE BLADE WITH INTERNAL COOLING CHANNELS AND GAS FLOW SEPARATOR**

(30) Priority: 19.12.2018 GB 201820669
(71) Applicant: Rolls-Royce plc, London N1 9FX (GB)
(72) Inventor: Mottram, Martin, Derby, Derbyshire DE24 8BJ (GB)
(74) Representative: Rolls-Royce plc

(57) **Abstract**

A turbine blade having a body enclosing a plurality of internal channels for the passage of coolant gas received through an inlet (32) formed in the blade root, comprising a gas flow separator (30), configured to separate coolant gas into first (35) and second (36) gas flows. The gas flow separator is configured to separate the first and second gas flows such that the level of contaminants in the first gas flow is lower than the level of contaminants in the second gas flow.

## Description

The present disclosure relates to thermal shielding in a gas turbine.

In a gas turbine engine, ambient air is drawn into a compressor section. Alternate rows of stationary and rotating aerofoil blades are arranged around a common axis, together these accelerate and compress the incoming air. A rotating shaft drives the rotating blades. Compressed air is delivered to a combustor section where it is mixed with fuel and ignited. The resulting hot combustion products expand through and therefore drive rotation of a series of turbines arranged downstream of the combustor. The turbines share rotor shafts in common with the rotating blades of the compressor and work, through the shaft, to drive rotation of the compressor blades.

It is well known that the operating efficiency of a gas turbine engine is improved by increasing the operating temperature. The ability to optimise efficiency through increased temperatures is restricted by changes in behaviour of materials used in the engine components at elevated temperatures which, amongst other things, can impact upon the mechanical strength of the blades and rotor disc which carries the blades. This problem is addressed by providing a flow of coolant through and/or over the turbine rotor disc and blades.

It is known to take off a portion of the air output from the compressor (which is not subjected to ignition in the combustor and so is relatively cooler) and feed this to surfaces in the turbine section which are likely to suffer damage from excessive heat. Typically the cooling air is delivered adjacent the rim of the turbine disc and directed to a port which enters the turbine blade body and is distributed through the blade, typically by means of a labyrinth of channels extending through the blade body.

In one known arrangement, a duct is provided integral to the blade. The duct is arranged to pass through a terminal portion of the root (a region adjacent an end of the root which, in use, sits at a radially innermost end of a "bucket groove" in the rotor disc circumference which receives the root) with an inlet at an upstream face of the terminal portion. One or more cooling passages are provided within the blade body and extend from a root portion towards a tip portion of the blade body.

In some arrangements the cooling passages comprise a leading edge passage and a main blade or "multi-pass" passage. The leading edge passage extends root to tip adjacent the leading edge of the blade. The "multi-pass" passage is an elongate and convoluted passage which typically incorporates multiple turns in three dimensions which extend the passage between the root and tip of the blade and from a middle section of the blade body, downstream to adjacent the trailing edge of the blade. The "multi-pass" can extend from root to tip multiple times as it travels towards the trailing edge ensuring the carriage of coolant throughout the blade body (excluding the leading edge which is cooled by the leading edge passage). At the root portion end, the cooling passages are arranged to intersect with the duct.
Cooling of the blade surfaces may be achieved through impingement cooling and/or effusion cooling. In impingement cooling an inner wall of a dual-walled blade is provided with multiple small impingement cooling holes which are in fluid communication with one or more of the cooling passages. Cooling air passing through the inner wall forms jets of cooling air which impinge against an inwardly facing surface of the outermost wall of the dual-walled blade assisting cooling of the outermost wall. The outermost wall may, in addition, be provided with effusion cooling holes, which may have an even smaller cross-sectional area than the impingement cooling holes. Some of the air entering a space between the walls of the dual-walled arrangement passes through these effusion hole creating a film of cooling air on the outwardly facing surface of the outermost wall. This creates a thermal barrier and provides additional cooling to the outermost wall.
It is known that, for example when operating in sandy or dusty environments, particulate contaminants can be drawn into a gas turbine engine and may be carried in the cooling air to the turbine blades. Problems can arise when the particles are of similar size to or larger than the impingement or effusion cooling holes; if cooling holes become blocked then cooling effectiveness becomes reduced and the blade may reach a higher than desirable temperature.

In an arrangement of the present disclosure, a turbine blade is provided having a body enclosing a plurality of internal channels for the passage of coolant gas received through an inlet formed in the blade root. The inlet supplies a duct which sits upstream of and in fluid communication with the internal channels. Downstream, the internal channels are in fluid communication with cooling holes passing through a wall of the turbine blade body. A gas flow separator is arranged in serial flow communication with the duct, downstream of the duct. The gas flow separates a gas flow passing through the duct into first and second gas flows such that the level of particulate contaminant in the first gas flow is lower than the level of particulate contaminant in the second gas flow. The flow separator has a first outlet which is in fluid communication with an internal channel of the blade and a second outlet which is directed axially downstream of the turbine blade. The arrangement is such that the first gas flow is directed toward the first outlet, to enter the internal channel, and the second gas flow is directed to the second outlet and to a space axially downstream of the turbine blade.

In an arrangement, the gas flow separator is configured to change the flow direction of coolant gas received through the inlet and to separate the coolant gas into the first and second gas flows based on the inertia of particulate contaminants within the coolant gas.

In an arrangement the gas flow separator comprises a vortex chamber, connected to the inlet via the duct and configured to create a vortex in gas received from the duct, in which the vortex rotates around a vortex axis. The vortex chamber has a first outlet provided on a first side of the vortex chamber arranged such that the gas exits the vortex chamber in a first direction parallel to the vortex axis. The vortex chamber also has a second outlet provided on a second side of the vortex chamber and arranged such that the gas exits the vortex chamber in a second direction that lies within a plane that is perpendicular to the vortex axis.

In an arrangement, the vortex chamber may be configured such that the vortex axis is aligned with the first outlet. In other words, the vortex axis may intersect the first side of the vortex chamber at a location that is coincident with the first outlet.

In an arrangement, the vortex chamber may be configured such the vortex axis intersects the first side of the vortex chamber at a location that is set apart from the first outlet.

In an arrangement, the vortex chamber may be configured such that the second direction is tangential to the vortex.

In an arrangement, the second outlet may be provided at a location on the second side of the vortex chamber that is adjacent to the first side of the vortex chamber.

In an arrangement, the vortex chamber may be configured such that gas enters the vortex chamber in a direction that is tangential to the vortex.

In an arrangement, the vortex chamber may comprise a separator gas inlet through which gas enters the vortex chamber. The separator gas inlet may be provided at a location that is on or adjacent a third side of the vortex chamber that intersects the vortex axis. At least one of the first and second outlets may be provided at a location on or adjacent a side of a vortex chamber that also intersects the vortex axis but is on the opposite side of the vortex chamber from the third side.

In an arrangement, the gas flow separator comprises a channel having an inlet, a first outlet for the first gas flow and a second outlet for the second gas flow. The channel may be configured such that for, gas to flow from the inlet to the first outlet it must change flow direction to a greater extent than for gas to flow from the inlet to the second outlet.

In an arrangement, the first outlet may be connected to at least one first internal channel in the turbine blade and the second outlet may be connected to at least one second internal channel in the turbine blade. In such an arrangement, the at least one first internal channel may be more sensitive to contaminants within the coolant gas than the at least one second internal channel. It will be appreciated that the turbine blade may include a plurality of the first internal channels and/or a plurality of the second internal channels.

In an arrangement, the second internal channel may be configured to provide a supply of coolant gas to a turbine blade outlet for use in cooling another component in a gas turbine engine in which the turbine blade is mounted. That is, the second gas flow may bypass the body of the blade.

In an arrangement, the minimum cross-section of the at least one first internal channel may be smaller than the minimum cross-section of the least one second internal channel.

In an arrangement, the size of an opening of the at least one first internal channel at an external surface of the turbine blade may be smaller than the size of an opening at the at least one second internal channel at an external surface of the turbine blade.

In an arrangement, the first outlet may be connected to an internal channel in the turbine blade that provides coolant to cool the trailing edge of the turbine blade.

In an arrangement, the vortex chamber may have plural first outlets and/or plural second outlets.

In an arrangement, the duct is configured to receive gas entering the turbine blade from the inlet and provide a first portion of the gas directly to an internal channel in the turbine blade and a second portion of the gas to the vortex chamber.

In an arrangement, there is provided a gas turbine engine comprising at least one turbine blade as described above.

The skilled person will appreciate that except where mutually exclusive, a feature described in relation to any one of the above aspects may be applied *mutatis mutandis* to any other aspects. Furthermore, except where mutually exclusive, any feature described herein may be applied to any aspect and/or combined with any other feature described herein.

Embodiments will now be described by way of example only with reference to the figures, which:
Figure 1 is a sectional side view of a gas turbine engine;
Figure 2 is a schematic view of a turbine blade within a gas turbine engine, showing an arrangement of coolant gas flows;
Figure 3 is a schematic plan view of an arrangement of part of a turbine blade;
Figure 4 is a schematic cross-sectional view of the arrangement depicted in Figure 3; and
Figure 5 is a schematic cross-section view of another embodiment.
Figure 6 is a schematic cross section of a turbine blade comprising a gas flow separator.
Figure 7 is a cross section of the root portion of the blade of Figure 6.

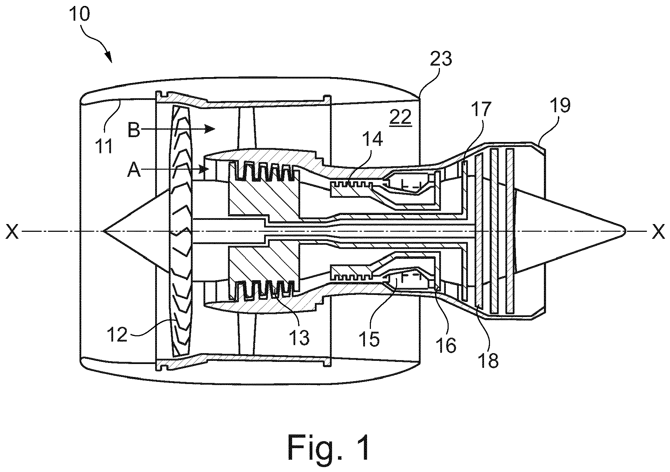

With reference to Figure 1, a ducted fan gas turbine engine generally indicated at 10 has a principal and rotational axis X-X. The engine 10 comprises, in axial flow series, an air intake 11, a compressive fan 12 (which may also be referred to as a low pressure compressor), an intermediate pressure compressor 13, a high-pressure compressor 14, combustion equipment 15, a high-pressure turbine 16, an intermediate pressure turbine 17, a low-pressure turbine 18 and a core exhaust nozzle 19. The engine also has a bypass duct 22 and a bypass exhaust nozzle 23.

The gas turbine engine 10 works in a conventional manner so that the air entering the intake 11 is accelerated by the fan 12 to produce two air flows; a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place. The compressed air exhausted from the high-pressure compressor 14 is directed into the combustion equipment 15 where it is mixed with fuel and the mixture combusted. The resulting hot combustion products then expand through, and thereby drive the high, intermediate and low-pressure turbines 16, 17 and 18 before being exhausted through the nozzle 19 to provide additional propulsive thrust. The high, intermediate and low-pressure turbines 16, 17, 18 respectively drive the high and intermediate pressure compressors, 14, 13 and the fan 12 by suitable interconnecting shafts.

As discussed above, coolant gas may be provided to a plurality of internal channels within a turbine blade in order to provide cooling to the turbine blade. Similarly coolant gas flows may be provided to additional components in a gas turbine engine.

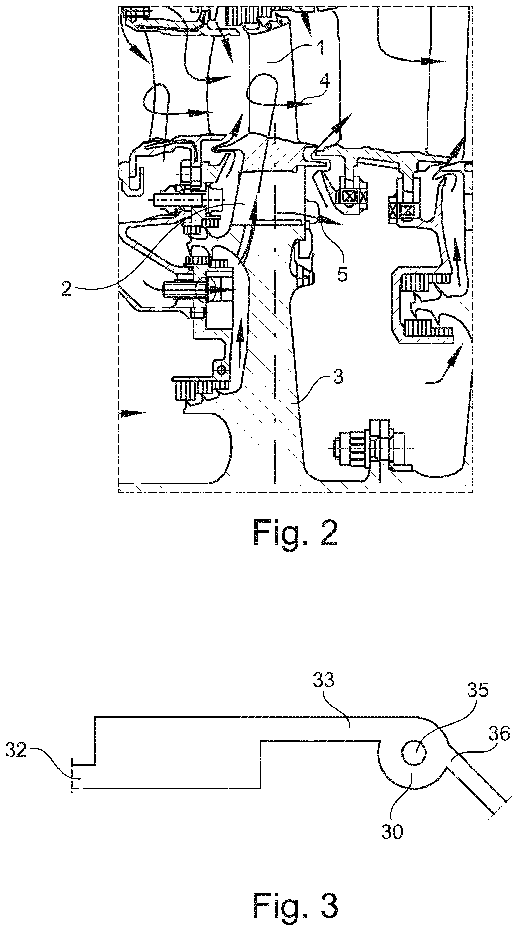

Figure 2 schematically depicts a number of possible coolant gas flows around a turbine blade 1. As shown, in an arrangement, the turbine blade 1 may have an inlet, for example formed in the blade root 2, through which coolant gas may be received, for example from the rotor disk 3 in which, in use, the turbine blade is mounted. This may supply a flow of coolant gas 4 through cooling channels formed within the turbine blade. Different sections of the turbine blade may have different cooling requirements and, accordingly, different sections of a turbine blade may have differing arrangements of internal channels.

Additionally, as discussed further below, a turbine blade may be configured to have an outlet to provide a flow of coolant gas 5 to be used for cooling of another component in the gas turbine engine.

In an arrangement, the turbine blade may have a gas flow separator, configured to separate coolant gas received through the inlet into separate gas flows. The gas flow separator may be configured to separate the gas flows such that the respective level of particulate contaminants is different in at least two of the separated gas flows.

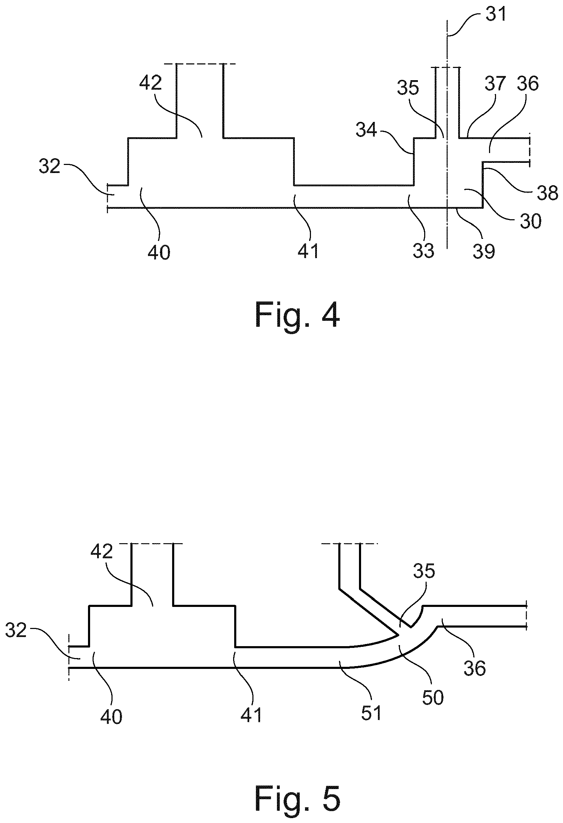

Figure 3 depicts, in plan view, a schematic arrangement of a duct for feeding internal channels and such a gas flow separator within a turbine blade root for supplying coolant gas to different locations, at least one of which is an internal channel of the blade. Figure 4 shows the arrangement in cross-section.

In the arrangement shown, the gas flow separator is configured as a vortex chamber 30, provided within the turbine blade. The vortex chamber 30 is arranged such that gas entering the vortex chamber is induced to form a vortex, namely a body of gas that rotates within the vortex chamber 30 about a vortex axis 31.

In an arrangement, coolant gas is received from an inlet 32 formed in the blade root. It passes through a duct 40, a first portion of the cooling air heading directly into an internal channel 42 and a second portion, which may be denser than the first portion, is provided to a vortex chamber inlet 33. The second portion may comprise a significant concentration of particulate contaminates which would contribute to an additional density of the second portion with respect to the first portion. The vortex chamber 30 may be shaped such that gas provided into the vortex chamber 30 through the vortex chamber inlet 33 is turned to rotate about the vortex axis 31. For example, the vortex chamber 30 may have sidewalls 34 that are curved around the vortex axis 31. It should be appreciated that, although in the schematic plan view depicted in Figure 3 the sidewalls 34 of the vortex chamber 30 are such that the vortex chamber 30 is generally circular in plan view, in practice, it may have other shapes.

The vortex chamber inlet 33 may also be arranged in order to promote the formation of a vortex within the vortex chamber 30. For example, the vortex chamber inlet 33 may be arranged such that gas entering the vortex chamber 30 through the vortex chamber inlet 33 enters in a direction that is tangential to the vortex.

As shown in Figures 3 and 4, the vortex chamber may have a first outlet 35 and a second outlet 36. The first outlet 35 is provided on a side of the vortex chamber 30 such that the gas exiting the vortex chamber 30 through the first outlet 35 exits the vortex chamber 30 in a direction parallel to the vortex axis 31 and enters an internal channel (not shown) of the blade body which may be the same or a different internal channel to the internal channel 42. For example, as shown in Figures 3 and 4, the first outlet 35 is provided on a side 37 of the vortex chamber 30 that intersects with the vortex axis 31.

In the arrangement depicted in Figures 3 and 4, the first outlet 35 is positioned on the first side 37 of the vortex chamber 30 such that the vortex axis 31 passes through the first outlet 35. However, it should be appreciated that alternative arrangements may be used. For example, in an arrangement the first outlet 35 may be located on the first side 37 of the vortex chamber 30 at a position that is set apart from the vortex axis 31.

The second outlet 36 may be provided on a second side 38 of the vortex chamber 30 and arranged such that gas exiting the vortex chamber 30 through the second outlet 36 exits in a direction that lies in a plane that is perpendicular to the vortex axis 31. For example, as shown in Figure 3 the gas exiting the vortex chamber 30 through the second outlet 36 may exit in direction that is tangential to the vortex. Accordingly, the second outlet 36 may be arranged such that the gas exiting the vortex chamber 30 through the second outlet 36 is gas from the outer edge of the vortex formed within the vortex chamber 30.

The vortex formed in the vortex chamber 30 is a rotating body of gas. However, it should be appreciated that particulate contaminants may be entrained in the coolant gas forming the vortex. As a result of the rotation of the coolant gas within the vortex and the inertia of any particulate contaminants entrained within the coolant gas, the particulate contaminants may be forced towards the edge of the vortex. Therefore, the concentration of particulate contaminants in the gas exiting through the second outlet 36 from the edge of the vortex chamber 30 may be higher than the concentration of particulate contaminants in the gas exiting the vortex chamber 30 through the first outlet 35.

It should also be appreciated that in such an arrangement, the concentration of particulate contaminants in the coolant gas exiting through the first outlet 35 is lower than the concentration of particulate contaminants in the coolant gas entering the vortex chamber 30, namely the gas provided to the turbine blade duct from the blade root inlet 32. Similarly the concentration of particulate contaminants in the coolant gas exiting through the second outlet 36 is higher than the concentration of particulate contaminants in the coolant gas provided to the turbine blade duct from the blade root inlet 32.

As shown in Figure 4, although the second outlet 36 and the vortex chamber inlet 33 may both be provided on sides of the vortex chamber 30 at the edge of the vortex, for example such that the gas flows into and out of the vortex chamber 30 tangentially to the vortex, the inlet and outlet may be separated from one another in a direction parallel to the vortex axis 31. Such an arrangement may reduce the propensity for gas to flow directly from the vortex chamber inlet 33 directly to the second outlet 36 ensuring engagement with the vortex.

As shown in Figure 4, the second outlet 36 may be provided on the second side 38 of the vortex chamber 30 at a location that is adjacent the side 37 in which the first outlet 35 is formed. The vortex chamber inlet 33 may be formed at the opposite end of the vortex chamber 30, namely adjacent a side 39 of the vortex chamber 30 through which the vortex axis 31 passes but that is opposite the side 37 in which the first opening is formed.

Figure 5 schematically depicts an alternative arrangement for a gas flow separator provided within the gas turbine blade. In the arrangement shown, the gas flow separator includes a channel 50 into which the coolant gas flows through an inlet 51. As with the vortex chamber 30 discussed above, the channel 50 has first and second outlets 35, 36.

The channel 50 is configured such that the gas flow exiting through the first outlet 35 must change direction relative to the gas flow entering inlet to a greater extent than gas that exits through the second outlet 36. In particular the gas exiting through the first outlet 35 may need to turn a sharp corner whereas the gas exiting through the second outlet may carry straight on or turn relatively gently.

In order for a change of flow direction to occur, the gas must be accelerated in the required change of direction. Any particulate contaminants entrained in the gas flow may have greater inertia. Such particulate contaminants may therefore tend not to be turned sharply and will tend to exit the channel 50 through the second outlet 36, resulting in relatively high particulate contaminant level in the second gas flow existing through the second outlet 36 and relatively low particulate contaminant level in the first gas flow exiting through the first outlet 35.

In an arrangement, the turbine blade may be configured such that the first outlet 35 of the gas flow separator is connected to a first internal channel within the turbine blade and the second outlet 36 is connected to a second internal channel within the turbine blade. The arrangement of the internal channels within the turbine blade may be selected such that the first internal channel, receiving gas from the first outlet 35, is more sensitive to contaminants in the coolant gas than the second internal channel, receiving gas from the second outlet 36. Such an arrangement may benefit from the arrangement discussed above, in which the gas flow separator may separate the coolant gas received at the inlet into a portion exiting through the first outlet 35 with a relatively low particulate contaminant concentration and a portion exiting through the second outlet 36 that has a relatively high particulate contaminant concentration.

It will be appreciated that the inlet 32, duct 40, internal channel 42 and connecting channel 41 of Figure 5 may be alternatively arranged with respect to one another to create a similar effect as the separator 51, 50, 35, 36. This may be done in combination with the separator 51, 50, 35, 56 or alternatively with the vortex separator, 30, 33, 35, 36 as described in relation to Figures 3 and 4. This allows two levels of particle separation, thus the cooling air is twice filtered before delivery to the areas in the cooling passages most prone to blockage.

It will be appreciated that the first and second internal channels within the turbine blade may be relatively more sensitive and relatively less sensitive, respectively to particulate contaminant for a variety of reasons. For example, the minimum cross-section of the first internal channel may be smaller than the minimum cross-section of the second internal channel. In such an arrangement, the first internal channel may have a greater risk of being blocked by a contaminant. In this context, it should be appreciated that references to the cross-section of an internal channel may relate to the cross-sectional area, the maximum width of the cross-section of the internal channel and/or the minimum width of the cross-section of the internal channel.

Alternatively or additionally, the size of an opening of the first internal channel to a cooling hole in a wall of the turbine blade body may be smaller than the size of an opening of the second internal channel to a cooling hole in a wall surface of the turbine blade. Again, this may result in the risk of a blockage caused by particulate contaminant concentration being higher for the first internal channel than for the second internal channel for a given particulate contaminant concentration within the coolant gas. In this context, it should be appreciated that references to the size of an opening to a cooling hole may refer to the cross-sectional area of the opening, the maximum width across the opening and/or the minimum width across the opening.

In an arrangement, the gas exiting through the first gas flow outlet 35, namely the gas with the lowest particulate contaminant concentration, may in particular be provided to an internal channel in the turbine blade that is used to cool a trailing edge of the turbine blade. Such an internal channel may desirably have the smallest cross-section of the internal channels formed within a turbine blade and/or have the smallest openings to cooling holes at the surface of the turbine blade.

Use of an arrangement such as that described above may ensure that gas with a lower particulate contaminant concentration may be provided to, for example, an internal channel in the trailing edge than the gas that is provided to a mid-section of the turbine blade body. This may enable turbine blades to be made with smaller internal channels and/or openings to cooling holes than would otherwise be possible, enabling more efficient use of cooling air. Air not needed for cooling can contribute to the work on the turbines downstream and aid in reducing the specific fuel consumption of the engine.

Use of gas that has been through the vortex chamber to cool the turbine blade and other components downstream may also result in gas flow with high swirl and/or turbulence. This may improve the heat transfer capacity of the coolant gas.

In an arrangement, the gas that exits the gas flow separator through the second outlet 36 may be used for cooling in regions in which the possibility of a blockage caused by a contaminant is of lesser concern. For example, this gas flow may supply coolant gas to another component in the gas turbine engine that is less sensitive to contaminants than the cooling channels within the turbine blade. Such a component might be a disc of an adjacent turbine stage, or a platform from which the turbine blade projects. In such an arrangement, the second channel in the turbine blade may be a channel within the blade root that connects to an outlet of the turbine blade to supply coolant gas to a downstream component or the region surrounding it. In this case, the second channel may have a larger cross-section than channels provided within the turbine blade that are provided to cool the turbine blade.

In an arrangement, coolant gas may be provided through the second channel within the turbine blade to the downstream disk cavity to purge the rim seals of the downstream nozzle guide vane. These gaps are relatively large, permitting axial movement of the rotor, and so are relatively tolerant to air with a greater concentration of particulate contaminants.

In an arrangement, the gas turbine blade may be arranged such that some of the coolant gas provided to the turbine blade is provided to a first internal channel in its as-provided form, namely without being separated into relative low-contaminant and relatively high-contaminant gas by the gas flow separator. For example, as shown in Figures 3 and 4, gas received at the turbine blade inlet 32 may pass through a duct 40. The first duct 40 may have a first outlet 41 that provides a portion of the coolant gas to the vortex chamber inlet 33. The first chamber 40 may also have a second outlet feeding internal channel 42 in the turbine blade body. The first internal channel may then receive coolant gas that has not been separated into relatively low-contaminant gas and relatively high-contaminant gas by the vortex chamber 30.

It will be appreciated that although gas flow separator discussed above is described as having a first outlet 35 providing relatively low-contaminant coolant gas and a second outlet 36 providing relatively high-contaminant gas, it should be appreciated that more than one first outlet, such as an outlet as described above that is arranged on a vortex chamber 30 to provide a relatively low-contaminant coolant gas, may be provided. Such an arrangement may provide separate supplies of coolant gas to respective outlets with different sensitivities to particulate contamination. Similarly, alternatively or additionally, more than one second outlet 36, such as an outlet on the vortex chamber 30 as discussed above that provides relatively high-contaminant gas, may be provided.

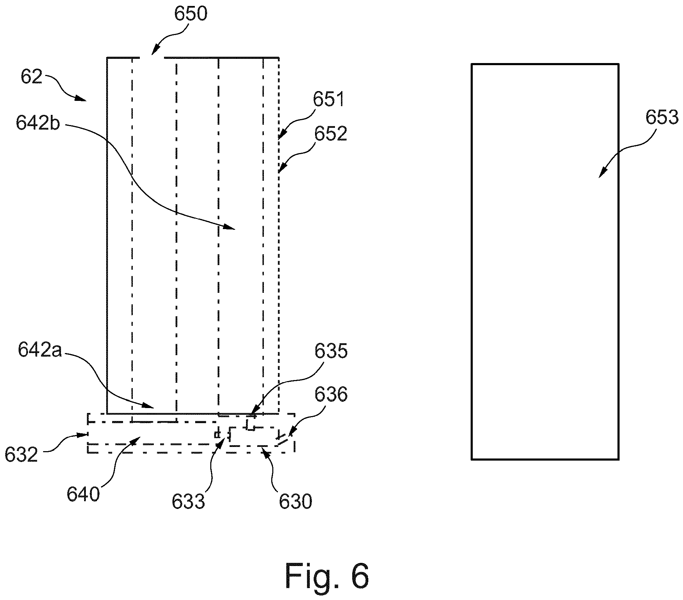

Figure 6 shows a schematic of a cross section of a turbine blade 62 in accordance with an embodiment of the invention. A root portion of the blade 62 has an air inlet 632 for receiving cooling air from an upstream source. Cooling air entering the inlet 632 proceeds to a duct 640. Two internal channels 642a and 642b extend radially outwardly from the root portion through the body of the blade 62. A first internal channel 642a is closer to a leading edge side of the blade 62, a second internal channel 642b sits adjacent a trailing edge 651 of the blade 62. The first internal channel 642a has an exit 650 in a radially outer end of the blade 62. The trailing edge 651 is provided with an array of very small diameter cooling holes 652 which may be susceptible to blockage by particulate contaminants. The cooling holes 652 are significantly smaller than the exit 650 to the first internal channel 642a. First internal channel 642a is in direct fluid communication with the duct 640.

At a downstream end of the duct 640 is a gas flow separator 630 which connects with the duct 640 via a separator inlet channel 633. The separator has a first gas flow outlet 635 which is in direct fluid communication with the second internal channel 642b. The second internal channel 642b is in direct fluid communication with the cooling holes 652 in the trailing edge 651. The separator has a second gas flow exit 636 which bypasses the internal channels 642a and 642b directing the second gas flow towards a component 653 downstream of the blade 62. For example, the component 653 might be a disc of an adjacent turbine stage or a platform on which an adjacent turbine blade or vane array stage is mounted. Alternatively, the second gas flow might be introduced into the working fluid stream which drives the turbines.

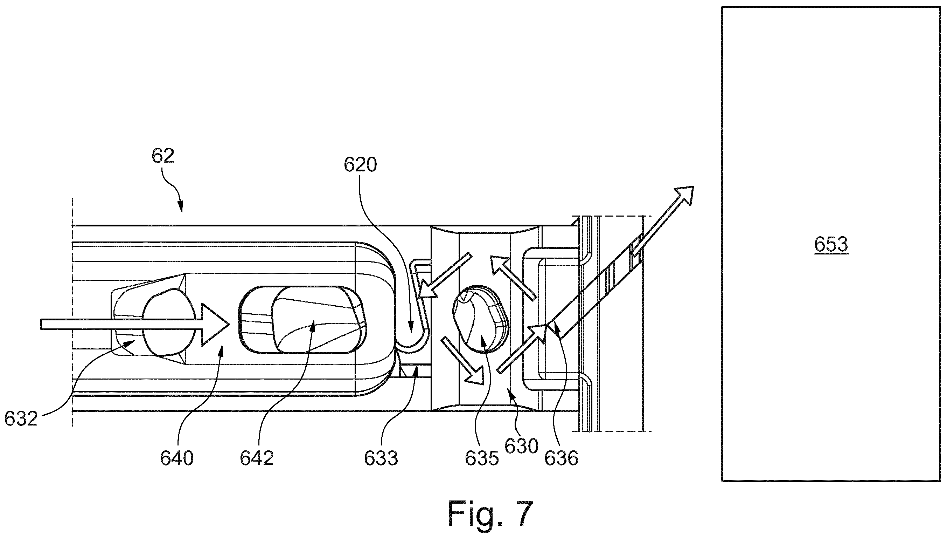

Figure 7 shows a cut through of blade 62 taken from a leading edge to a trailing edge of the blade, through the root portion of the blade. The same reference numerals as used in Figure 6 are used to identify the same features in Figure 7. As can be seen the separator inlet channel 633 is defined by a wall 620 which extends across the duct 640 to create a narrower cross section (relative to the duct 640) for the separator inlet channel 633.

In use, cooling air entering the inlet 632 travels to the duct 640 where a portion of the cooling is driven radially outwardly into the first internal channel 642a. The first internal channel 642a need not be a straight channel as illustrated but may be serpentine within the blade 62 body delivering cooling air throughout the leading edge side and/or mid-section of the blade 62 body. This air exits the first internal channel 642a through exit 650 in the blade tip. The first internal channel 642a and the exit 650 have a cross-sectional area which is consistently wider/of greater cross-sectional area than the largest particulate contaminants expected to be present in the cooling air entering the duct 640.
Another portion of air in the duct 640 is drawn into the gas separator 630 via the separator inlet channel 633. The separator 633 has a configuration broadly as described in relation to Figures 3 and 4, comprising a first gas flow outlet 635 and a second gas flow outlet 636. The separator is configured to generate a vortex around an axis which is substantially coaxially aligned with an axis of the first gas flow exit 635. The first gas flow outlet 635 is in direct fluid communication with the second internal channel 642b and extends substantially radially outwards from the root portion of the blade 62. As discussed previously, the vortex serves to separate heavier (larger) particulate contaminants in the gas flow from the lighter. The less dense air with no or only the smallest and lightest particulate contaminants remain at the centre of the vortex and are drawn through the first gas flow exit 635 and into the second internal channel 642b to feed the cooling holes 652 in the array along the trailing edge 651. The heavier particles form part of the second gas flow and are driven radially outwardly and away from the co-axis of the vortex and first gas flow outlet 635. The second gas flow outlet 636 is radially distant from the co-axis and arranged substantially tangentially with the vortex flow such that the heavier particles are driven to exit via the second gas flow exit 636 towards a surface of the other component 653.

Thus cooling air containing the larger and/or heavier particulate contaminants is caused to bypass the second internal channel 642b and small cooling holes 652 where the risk of blockage by such particulates is high. The first internal channel 642a and other component 653 are less sensitive to the larger and/or heavier particulates and so cooling air carrying such particulates can be used to cool these surfaces without high risk of blockage of the cooling passages.

It should be understood that the invention is not limited to the embodiments above-described and various modifications and improvements can be made without departing from the concepts described herein except where mutually exclusive, any of the features may be employed separately or in combination with any other features and the disclosure extends to and includes all combinations and sub-combinations of one or more features described herein.

## Claims

1. A turbine blade having a body enclosing at least one of internal channel (42) for the passage of particulate contaminated coolant gas received through an inlet (32) formed in the blade root, comprising:
a gas flow separator (30) arranged downstream of and in fluid communication with the inlet (2) and configured to separate coolant gas entering the separator (30) into first and second gas flows;
wherein the level of particulate contaminants in the first gas flow is lower than the level of particulate contaminants in the second gas flow and wherein the gas flow separator (30) comprises a first gas flow outlet (35) in fluid communication with the at least one internal channel and a second gas flow outlet (36) which bypasses the internal channel.

2. A turbine blade according to claim 1, wherein the gas flow separator is configured to change the flow direction of coolant gas entering the gas flow separator; and to separate the coolant gas into the first and second gas flows based on the inertia of particulate contaminants within the coolant gas.

3. A turbine blade according to claim 1 or 2, wherein the gas flow separator comprises:
a vortex chamber (30), configured to create a vortex in gas entering the vortex camber (30), in which the vortex rotates about a vortex axis (31);
wherein the first gas flow outlet (35) is provided on a first side (37) of the vortex chamber and is arranged such that the first gas flow exits the vortex chamber in a first direction parallel to the vortex axis (31), and the second gas flow outlet (36) is provided on a second side (38) of the vortex chamber and arranged such that the second gas flow exits the vortex chamber in a second direction that lies in a plane that is perpendicular to the vortex axis.

4. A turbine blade according to claim 3, wherein the vortex chamber (30) is configured such that the vortex axis (31) is aligned with the first gas flow outlet (35).

5. A turbine blade according to claims 3 or 4, wherein the vortex chamber (30) is configured such that the vortex axis (31) intersects the first side of the vortex chamber at a location set apart from the first gas flow outlet (35).

6. A turbine blade according to any one of claims 3 to 5, wherein the vortex chamber (30) is configured such that the second direction is tangential to the vortex.

7. A turbine blade according to any one of claims 3 to 6, wherein the second gas flow outlet (36) is provided at a location on the second side (38) of the vortex chamber (30) that is adjacent the first side (37) of the vortex chamber.

8. A turbine blade according to any one of claims 3 to 7, wherein the vortex chamber (30) is configured such that gas enters the vortex chamber in a direction that is tangential to the vortex.

9. A turbine blade according to any one of claims 3 to 8, wherein the vortex chamber (30) comprises a gas flow inlet (33) at a location that is on or adjacent a third side (34) of the vortex chamber (30) that intersects the vortex axis (31); and at least one of the first and second gas flow outlets (35, 36) is provided at a location on or adjacent a side (37) of the vortex chamber that is opposite the third side (39) and intersects the vortex axis.

10. A turbine blade according to claim 1 or 2, wherein the gas flow separator comprises:
a gas flow inlet; and
the gas flow inlet is configured such that for, gas to flow from the gas flow inlet to the first gas flow outlet it must change flow direction to a greater extent than for gas to flow from the inlet to the second gas flow outlet.

11. A turbine blade according to any one of claims 3 to 10, wherein the first outlet (35) is connected to a first internal channel in the turbine blade and the second outlet (36) is connected to a second internal channel in the turbine blade; and
wherein first internal channel is more sensitive to particulate contaminants in the coolant gas than the second internal channel.

12. A turbine blade according to claim 11, wherein the second internal channel is configured to provide a supply of coolant gas to an outlet for use in cooling a component of the gas turbine engine which is arranged downstream of the turbine blade.

13. A turbine blade according to claim 11 or 12, wherein the minimum cross-section of the first internal channel is smaller than the minimum cross-section of the second internal channel.

14. A turbine blade according to claim 12 or 13, wherein the size of an opening of the first internal channel to a cooling hole in a wall of the turbine blade body is smaller than the size of an opening of the second internal channel to a cooling hole in a wall of the turbine blade body.

15. A turbine blade according to any one of the preceding claims, wherein the first gas flow is provided to an internal channel in the turbine blade that provides coolant to cool a trailing edge of the turbine blade body.

16. A turbine blade according to any one of the preceding claims, further comprising a duct (40) that is configured to receive gas entering the inlet (32) and provide a first portion of the gas to an internal channel in the turbine blade and a second portion of the gas to the gas flow separator.

17. A turbine blade according to any one of claims 3 to 16, wherein the gas flow separator has plural first outlets (35).

18. A turbine blade according to any one of claims 3 to 17, wherein the gas flow separator has plural second outlets (36).

19. A gas turbine engine comprising a turbine blade according to any one of the preceding claims.
